# EUROPÄISCHE PATENTSCHRIFT

(11) **EP 2 205 990 B1**
(45) Veröffentlichungstag und Bekanntmachung des Hinweises auf die Patenterteilung: **29.08.2012**
(21) Anmeldenummer: 08836956.6
(22) Anmeldetag: 09.10.2008
(51) Int. Cl.: G01S 13/91, G01S 13/04, G01S 13/87

(54) **VORRICHTUNG ZUR ERFASSUNG EINES FAHRZEUGES AUF EINEM ROLLWEG EINES FLUGHAFENS**
DEVICE FOR DETECTING A VEHICLE ON AN AIRPORT RUNWAY
DISPOSITIF DE DÉTECTION D'UN VÉHICULE SUR UNE PISTE D'AÉROPORT

(30) Priorität: 09.10.2007 DE 102007048490
(43) Veröffentlichungstag der Anmeldung: 14.07.2010
(73) Patentinhaber: ADB BVBA, 1930 Zaventem (BE)
(72) Erfinder: LAENEN, Guy, B-2260 Westerlo (BE); VANDEVOORDE, Jean-Claude, B-1820 Steenkokkerzeel (BE); BOLLENS, Geert, B-3370 Boutersem (BE)
(74) Vertreter: pronovem
(86) Internationale Anmeldenummer: PCT/EP2008/063537
(87) Internationale Veröffentlichungsnummer: WO 2009/047292

(56) Entgegenhaltungen:
- EP-A- 0 674 186
- US-A- 5 508 697
- US-A1- 2005 140 540
- US-A1- 2006 066 472

## Beschreibung

Die Erfindung bezieht sich auf eine Vorrichtung zur Erfassung eines Fahrzeuges, insbesondere eines Luftfahrzeuges, auf einem Rollweg eines Flughafens, insbesondere auf einer Startoder Landebahn, auf einem Taxiweg oder auf einem Vorfeldbereich, mit wenigstens einem im Bereich des Rollweges angeordneten Radarsensor, der oder die zur Abtastung eines räumlichen Erfassungsbereichs mit einem Radarstrahl ausgebildet ist bzw. sind.

Dem weltweit zunehmenden Flugverkehr stehen Flughäfen mit ihren begrenzten Rollwegen zur Abwicklung von Starts und Landungen der Flugzeuge gegenüber. Dabei können Ausdehnungen der Betriebszeiten sowie Neu- oder Ausbauten von Flughäfen mit der Zunahme des Flugverkehrs nicht Schritt halten. Die Folgen sind steigende Start- und Landetakte sowie ein dichterer Verkehr auf Start- und Landebahnen, auf Taxiwegen, auf den Vorfeldern und im Bereich zwischen den Flugsteigen der Flughäfen. Dabei teilen sich Luftfahrzeuge, insbesondere Flugzeuge unterschiedlichster Typen, aber auch Bodenfahrzeuge, wie Tankwagen, Zubringerbusse, Gepäckzüge, Versorgungsfahrzeuge für Bodenstrom und Catering, mobile Zustiegsrampen, und dergleichen, die Rollwege eines Flughafens.

Durch die hohe Verkehrsdichte kommt es zunehmend vor, dass sich Fahrzeuge gegenseitig behindern, was zu ungewollten Zwischenfällen, wie der unnötigen Blockierung einer Start- oder Landebahn, oder sogar zu Zusammenstößen mit erheblichen Fahrzeug- oder gar Personenschäden führen kann. Besonders kritische Verkehrssituationen stellen hier die Beachtung von Haltepositionen vor einer Einmündung oder Kreuzung eines Rollweges in eine bzw. mit einer Start- oder Landebahn, die Fahrzeugverfolgung im mehrspurigen Vorfeldbereich und generell der Bereich zwischen Terminals. Zwischenfälle schränken die Verfügbarkeit der Rollwege und damit die Kapazität eines Flughafens ein, was insgesamt den Flugverkehr eher behindert als dessen Dichte abbaut.

Es ist eine Vielzahl an Systemen zur Überwachung und Steuerung des Flughafenverkehrs bekannt. Für die Luftfahrzeugbewegungen im Nahbereich des Flughafens ist das Kontrollpersonal im Kontrollturm oder in Kontrollzentralen zuständig, zu dem auch die Rollwege des Flughafens gehören. Neben der verbalen Funkkommunikation zu den am Verkehr beteiligten Fahrzeugen steht dem Kontrollpersonal eine zentrale Bedien- und Beobachtungseinheit mit Bildschirmen und Eingabegeräten zur Verfügung. Über die Bildschirme erhält das Kontrollpersonal Informationen von Erfassungsvorrichtungen zur Detektion von Flugzeugen, während über die Eingabegeräte Befeuerungseinrichtungen zur Abgabe von Lichtsignalen oder leuchtende Hinweisschilder für die Fahrzeugführer bedient werden.

Zur Erfassung von Flugzeugen sind Multilaterationssysteme bekannt, bei welchen die Position eines Flugzeuges aus der Laufzeitdifferenz eines vom Flugzeug gesendeten Signals zu drei oder mehreren auf dem Flughafengelände verteilt angeordneten Sensoren berechnet wird. Daneben ist die Ortung von Flugzeugen durch den Bodenradar mit rotierender Antenne bekannt. Hierzu wird auf die Offenlegungsschrift DE 103 06 922 A1 verwiesen, aus der ein System zur Überwachung eines Flughafengeländes bekannt ist, bei dem Flugzeuge mittels mehrerer Radarsensoren geortet werden. Die Geländeabtastung mit den üblichen rotierenden Antennen wird dort simuliert, indem eine Vielzahl von auf einem gekrümmten Träger angebrachter Antennenelemente zeitlich nacheinander mit Sendesignalen angesteuert wird.

Die genannten Erfassungsvorrichtungen weisen große Erfassungsbereiche auf, die sich über das gesamt Flughafengelände und darüber hinaus erstrecken. Sie weisen zeitliche, durch Latenzzeiten der Sensorik bedingte Erfassungslücken aber auch räumliche Erfassungslücken in Form von Schattenflächen auf; daneben treten Erfassungsfehler, wie Geister oder Phantome, auf. Außerdem sind derartige Erfassungsvorrichtungen kostspielig in Anschaffung und im Betrieb.

Daneben sind lokale Erfassungsvorrichtungen bekannt, deren Erfassungsbereiche kleiner und in unmittelbarer Sensornähe sind. Hier sind Mikrowellenbarrieren bekannt, deren Sender und Empfänger auf gegenüberliegenden Seiten eines Rollweges angeordnet sind und die ein Flugzeug detektieren, wenn es beim Eindringen in den Erfassungsbereich den Empfänger gegenüber dem Sender abschattet. Derartige Erfassungsvorrichtungen sind sehr wettersensitiv.

Die Übersetzung DE 37 52 132 T2 der europäischen Patentschrift EP 0 317 630 B1 offenbart eine Vorrichtung zur Führung eines Flugzeuges auf dem Boden. Es werden Flugzeug-Erfassungssignale von zwei Sensoren, die benachbarten Spulenschleifen entsprechen, stets im überlappenden Zustand ausgegeben, wodurch ein Flugzeug kontinuierlich erfasst werden kann. Im Falle eines Kraftfahrzeuges überlappen sich die Signale nicht, so dass diese von Flugzeugen unterschieden werden können. Induktionsschleifen sind jedoch sehr wartungsanfällig und durch deren Verlegung in der Rollbahn auch wartungsaufwendig.

Aus der Offenlegungsschrift DE 199 49 737 A1 ist eine Vorrichtung zur Führung von Luftfahrzeugen auf Landeplätzen bekannt, bei der wenigstens ein Radarsensor zur Luftfahrzeugüberwachung vorgesehen ist. Der Radarsensor ist als Dopplerradar ausgebildet, um über die Frequenzdifferenz die Bewegung des Flugzeuges zu überwachen. Bevorzugt werden mehrere Sensoren über die Länge einer Flughafenbahn verteilt, um eine vollständige Überwachung zu ermöglichen. Es sind je zwei Radarsensoren in eine Unter- oder Überflurfeuerlampe integriert, deren Strahlungskeulen sich von unten schräg nach oben in zwei entgegengesetzte Richtungen erstrecken.

Dokument US 5508697 offenbart eine Vorrichtung zur Erfassung eines Luftfahrzeuges auf einem Rollweg eines Flughafens, umfassend ein Paar Sender/Empfänger von elektromagnetischen Wellen, die an jeder Seite eines Rollwegs zur Detektion der Räder eines Flugzeugs angeordnet sind, und einen zweiten Empfänger von elektromagnetischen Wellen, der an derselben Seite und getrennt vom Sender angeordnet ist zum Empfang elektromagnetischer Wellen, die vom Sender ausgesandt und vom Flugzeugrumpf reflektiert sind.

Dokument EP 0674186 offenbart eine Vorrichtung zur Erfassung eines Luftfahrzeuges auf einem Rollweg eines Flughafens, unter Verwendung einer Lasersendeeinrichtung und einer Laserempfangseinrichtung mit nachgeordneter Auswerteeinheit. Als Lasersendeeinrichtung ist ein Zeilenscanner vorgesehen, der zwei in einem vorgegebenen Winkel zueinander stehende vertikale Zeilen von Laserstrahlen aussendet.

Der Erfindung liegt die Aufgabe zugrunde, eine Erfassungsvorrichtung der eingangs genannten Art derart weiterzubilden, dass die Erfassung von sich auf Rollwegen bewegenden Fahrzeugen mit größerer Messgenauigkeit, höherer Sensorverlässlichkeit und bei Anwendung eines robusten Messprinzips ermöglicht wird.

Die Aufgabe wird erfindungsgemäß gelöst durch eine gattungsgemäße Erfassungsvorrichtung mit den Merkmalen des kennzeichnenden Teils des Patentanspruches 1. Der Erfassungsbereich weist zwei keulenförmige Teilbereiche auf, die sich horizontal über den Rollweg und quer zur Fahrtrichtung des Fahrzeugs erstrecken. Hierdurch entsteht eine Geometrie des Erfassungsbereiches, die eine einfache und zeitverzögerungsfreie Bestimmung der Präsenz sowie von Bewegungsgrößen eines passierenden Fahrzeuges, insbesondere eines Flugzeuges, erlaubt. Indem der Radarsensor zur Abtastung des Erfassungsbereichs mit Mikrowellen ausgebildet ist, kommt ein Messprinzip mit hoher Genauigkeit und Robustheit zur Anwendung.

In einer vorteilhaften Ausführungsform der erfindungsgemäßen Erfassungsvorrichtung ist der wenigstens eine Radarsensor zweistrahlig ausgebildet und die zwei Teilbereiche des Erfassungsbereichs um einen in einer horizontalen Ebene liegenden Winkel zueinander verdreht ausgerichtet. Hierdurch wird eine kompakte Ausführung ermöglicht, was im Feldeinsatz auf Flughäfen bei den mitunter hohen Windlasten vorteilhaft ist. Ein zweistrahliger Radarsensor liefert bei einer gegebenen störbehafteten Messung für das Signal-/Rausch-Verhältnis kleinere Streuwerte. Durch eine Asymmetrie der entsprechenden Normierungskurven der beiden die Teilbereiche abtastenden Strahlengänge ergeben sich vorteilhaft weniger ähnliche Winkelmuster, so dass Messstreuungen einen kleineren Einfluss aufweisen. Die Folge sind weniger falsche Winkelzuordnungen. Alternativ können die zwei Teilbereiche aber auch durch zwei einstrahlige Radarsensoren abgetastet werden.

In einer bevorzugten Ausgestaltung der erfindungsgemäßen Erfassungsvorrichtung ist der Radarsensor zur Abtastung seines Erfassungsbereichs mittels des frequenzmodulierten Dauerstrichverfahrens ausgebildet. Der Radarsensor sendet demnach fortwährend aber mit einer sich ständig ändernden Frequenz im Sägezahnmuster oder mit linearer, abwechselnd steigender und fallender Frequenz, wodurch neben der Geschwindigkeit des Fahrzeugs auch dessen Abstand vom Sensor ermittelt werden kann.

Erfindungsgemäß weist die Erfassungsvorrichtung eine Steuereinheit zur Auswertung von vom Radarsensor gelieferten Abtastsignalen auf. Mittels Rechner- und Speichermitteln der Steuereinheit können ihr zugeführte Sensorsignale ohne Zeitverlust unter Anwendung hinterlegter Auswertungsalgorithmen verarbeitet werden, um zunächst zu erkennen, ob sich überhaupt ein Fahrzeug im Erfassungsbereich befindet, und um im positiven Fall zu hinsichtlich einer Fahrzeugzustands- und -typerkennung verwertbaren Detektionsergebnissen zu gelangen.

Vorzugsweise ist die Steuereinheit der erfindungsgemäßen Erfassungsvorrichtung zur Bestimmung einer Position und/oder einer Geschwindigkeit und/oder einer Beschleunigung und/oder einer Länge und/oder eines Typs des Fahrzeugs ausgebildet. Durch Vergleich mit in den Speichermitteln der Auswertungseinheit abgelegten Referenzmustern und -werten kann eine Vielzahl an Flugzeug- und sonstigen Bodenfahrzeugtypen einschließlich deren Position bzw. Lage und Bewegungszustand erfasst werden.

In einer bevorzugten Ausführungsform ist die Steuereinheit der erfindungsgemäßen Erfassungsvorrichtung über eine Kommunikationsschnittstelle zum bidirektionalen Datenaustausch mit einer zentralen Bedien- und Beobachtungseinheit verbunden. Die Kommunikationsschnittstelle kann als leitungsgebundener Feldbus mit einer lokalen Kommunikationseinheit und einer Kommunikationsleitung ausgebildet sein, aber auch als draht-loses lokales Datennetzwerk. Über dieses kann die Steuereinheit Meldungen über Sensorauswertungen an das Kontrollpersonal einer zentralen Bedien- und Beobachtungseinheit, beispielsweise eines Kontrollturmes des Flughafens, übertragen, aber auch an andere Steuereinheiten anderer Erfassungsvorrichtungen.

Erfindungsgemäß ist die Steuereinheit der Erfassungsvorrichtung über die Kommunikationsschnittstelle zur Ansteuerung mit einer Befeuerungseinrichtung verbunden, die am Rollweg dem Erfassungsbereich des Radarsensors in Fahrtrichtung nachfolgend angeordnet und zur Abgabe eines Lichtsignals an ein vom Radarsensor erfasstes Fahrzeug ausgebildet ist. Ist die Befeuerungseinrichtung zur Abgabe eines Sperr- oder Hinweissignals ausgebildet, so kann diese beispielsweise durch Ansteuerung seitens der Steuereinheit aktiviert werden, wenn die Steuereinheit ein Fahrzeug erfasst, welches keine Freigabe zur Weiterfahrt hat oder mit zu hoher Geschwindigkeit fährt oder aber sich seitlich zu weit von der Mittellinie eines Rollweges entfernt hat. Vor Aktivierung der Befeuerungseinrichtung kann vorbehaltlich einer Bestätigung seitens der Bedien- und Beobachtungseinheit erfolgen.

In einer weiteren bevorzugten Ausgestaltung umfasst die erfindungsgemäße Erfassungsvorrichtung ein den wenigstens einen Radarsensor aufnehmendes Gehäuse, welches einen für Mikrowellen durchlässigen Bereich aufweist. Durch das Gehäuse wird der Radarsensor vor Witterungseinflüssen und aufgewirbelten Kleinteilen geschützt. Es kann aus Aluminiumdruckguss oder Kunststoff bestehen, muss aber einen Bereich aufweisen, durch den die Sendestrahlen und die reflektierten Echostrahlen hindurchtreten können.

Vorzugsweise ist das Gehäuse der erfindungsgemäßen Erfassungsvorrichtung über Flurniveau seitlich des Rollweges angeordnet und mittels einer eine Sollbruchstelle aufweisenden Bodenhalterung befestigt. Hierdurch ist gewährleistet, dass der Hinderniswiderstand, den die Erfassungsvorrichtung einem vom Rollweg abgekommenen Fahrzeug entgegensetzt, definiert und nicht zu hoch ist. Es ist jedoch auch denkbar, das Gehäuse unterflur in den Rollweg eingebettet anzuordnen.

In einer weiteren vorteilhaften Ausgestaltung ist der Radarsensor der erfindungsgemäßen Erfassungsvorrichtung in das Gehäuse eines Unterflur- oder eines Überflurfeuers integriert. Durch Integration des Sensors in ein Feuer können mit Vorteil standardisierte Bauteile verwendet und Energieversorgungs-, Steuer- und Kommunikationseinheiten von Befeuerungseinrichtungen genutzt werden.

Weitere Eigenschaften und Vorteile der erfindungsgemäßen Erfassungsvorrichtung ergeben sich aus der nachfolgenden Beschreibung der Zeichnungen, in deren
- FIG 1: eine Draufsicht auf eine an einem Rollweg angeordnete Erfassungsvorrichtung,
- FIG 2: ein Querschnitt durch den Erfassungsbereich eines Radarsensors,
- FIG 3: ein zeitlicher Verlauf einer einem ersten Teilbereich des Erfassungsbereichs zugeordneten Signalamplitude,
- FIG 4: ein zeitlicher Verlauf eines dem ersten Teilbereich des Erfassungsbereichs zugeordneten Antennensignals,
- FIG 5: ein zeitlicher Verlauf einer einem zweiten Teilbereich des Erfassungsbereichs zugeordneten Signalamplitude,
- FIG 6: ein zeitlicher Verlauf eines dem zweiten Teilbereich des Erfassungsbereichs zugeordneten Antennensignals,
schematisch dargestellt sind.

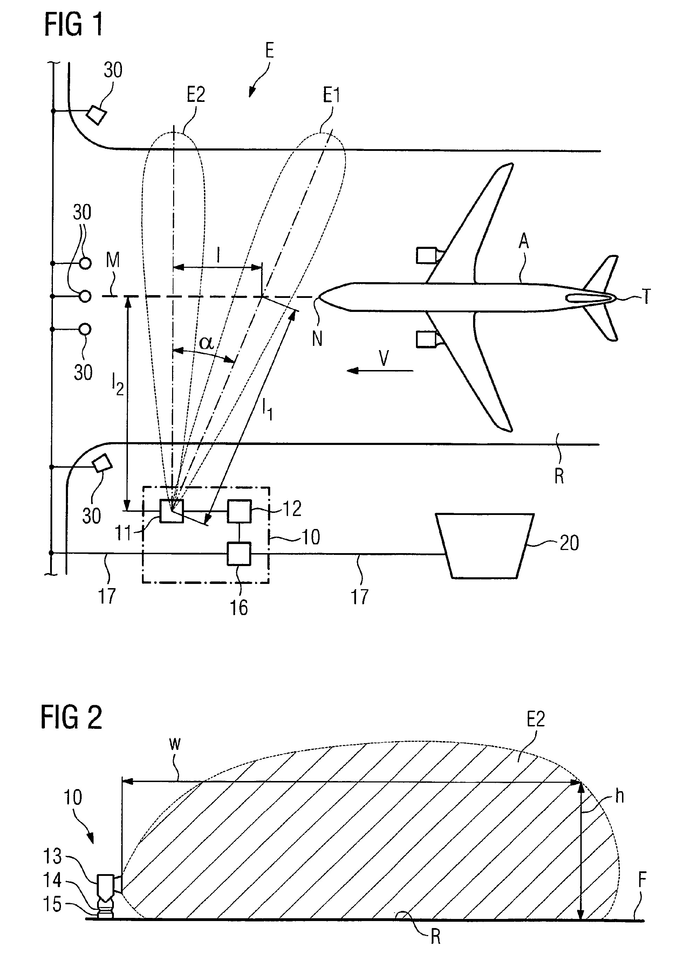

FIG 1 zeigt ein auf einem Rollweg R eines Flughafens rollendes Flugzeug A. Bei dem Rollweg R handelt es sich beispielsweise um einen Taxiweg von etwa 30 m Breite, der in Fahrtrichtung V des Flugzeuges A voraus auf eine Start- und Landebahn stößt. Auf Taxiwegen besitzen Flugzeuge typischerweise eine Geschwindigkeit von 30 km/h bis 80 km/h, mit der sie sich in etwa auf dessen Mittellinie M bewegen. Zur Überwachung des auf die Start- bzw. Landebahn zurollenden Verkehrs ist eine erfindungsgemäße Vorrichtung 10 zur Erfassung von sich auf dem Rollweg R bewegenden Fahrzeugen vorgesehen.

Die Erfassungsvorrichtung 10 weist hierzu einen zweistrahligen Radarsensor 11 auf, der beispielsweise in einem Abstand von etwa 10 m seitlich zum Rand des Taxiweges angeordnet ist. Der Radarsensor 11 tastet einen Erfassungsbereich E ab, der zwei keulenförmige Teilbereiche E1 bzw. E2 aufweist. Die Strahlachsen der zugeordneten Radarstrahlen sind in FIG 1 durch Strichpunktlinien gekennzeichnet. Jeder Teilbereich E1 bzw. E2 erstreckt sich horizontal und quer zur Fahrtrichtung V des Flugzeuges A über den Rollweg R. Die Strahlachse des zweiten Teilbereiches E2 verläuft dabei im Wesentlichen senkrecht zur Mittellinie M, während die Strahlachse des ersten Teilbereiches E1 um einen - horizontalen, also in der Zeichnungsebene liegenden - Winkel α von vorzugsweise zwischen 5° und 45°, besonders bevorzugt zwischen 10° und 20°, relativ zur Strahlachse des zweiten Teilbereichs E2 gegen Fahrtrichtung V verdreht ausgerichtet ist.

Die Radarstrahlen tasten den Erfassungsbereich E mit Mikrowellenstrahlung, was besonders genaue Messwerte liefert und den Einsatz von Radarsensoren mit ausgezeichneter Robustheit erlaubt. Gemäß FIG 2 haben die Radarstrahlen, beispielsweise Teilbereich E2 des Erfassungsbereichs E, eine Erfassungsreichweite w von bis zu 100 m und eine Erfassungshöhe h von mindestens 25 m über dem Flurniveau F des Rollweges R. Jeder der Teilbereiche E1 bzw. E2 spannt dabei eine ebene Detektionsfläche auf, die senkrecht auf dem Rollweg R steht, was durch den fokussierten Radarstrahl ermöglicht wird. Der Radarsensor 11 kann dabei nach dem frequenzmodulierten Dauerstrichverfahren arbeiten.

Nach FIG 2 weist die Erfassungsvorrichtung 10 ein Gehäuse 13 auf, von welchem der hier nicht dargestellte Radarsensor 11 zum Schutz vor Witterungseinflüssen und umherfliegende Kleinteile umschlossen ist. An seiner dem Rollweg R zugewandten Seite weist das Gehäuse 13 einen für Mikrowellen transparenten Bereich auf, der die vom Sensor 11 ausgesandten Radarstrahlen und vom Flugzeug A zur Sensorantenne reflektierte Echostrahlen durchlässt. Das Gehäuse 13 ist über Flurniveau F angeordnet und weist ein Oberteil auf, das relativ zu einem Unterteil kipp- und drehbar ausgebildet ist. Hierdurch kann der Radarstrahl ausgerichtet werden. Das Unterteil weist eine Halterung 15 zur Befestigung des Gehäuses 13 am Boden auf, welche eine Sollbruchstelle 14 in Form einer Querschnittseinschnürung umfasst. Mit Vorteil ist die Erfassungsvorrichtung 10 in ein Überflurfeuer integriert.

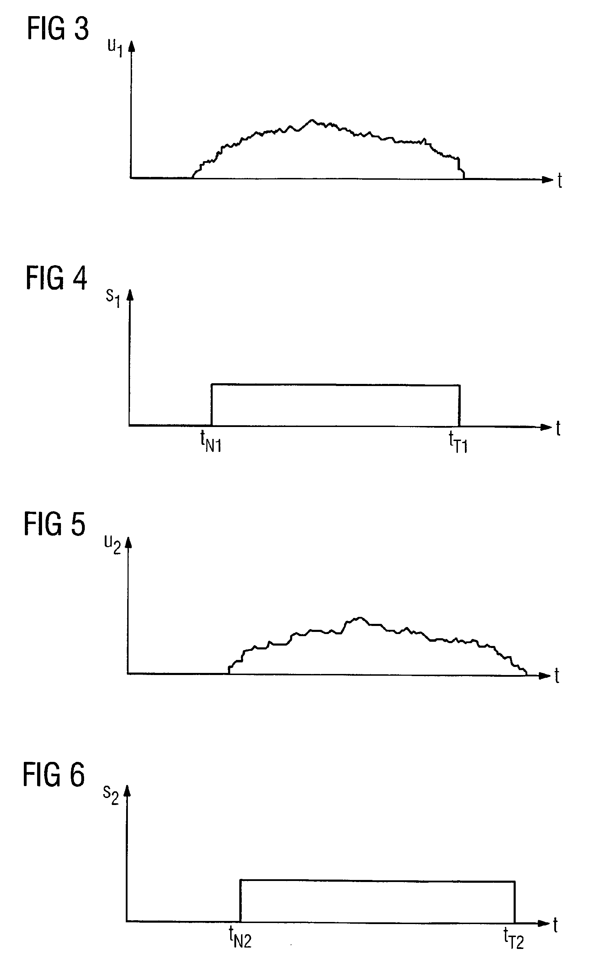

Zur Auswertung von vom Radarsensor 11 gelieferten Abtastsignalen umfasst die Erfassungsvorrichtung 10 gemäß FIG 1 eine lokale Steuereinheit 12 mit nicht dargestellten Rechen- und Speichermitteln zur elektronischen Datenverarbeitung. Durchdringt das rollende Flugzeug A den ersten und zweiten Teilbereich E1 bzw. E2, werden in der Sensorantenne Spannungsamplituden u₁ bzw. u₂ erzeugt, deren zeitliche Verläufe in FIG 3 und FIG 5 dargestellt sind. Diese Sensoramplituden u₁ bzw. u₂ zeichnen eine Signatur des erfassten Flugzeuges A, aus der entsprechende Antennensignale s₁ bzw. s₂ gewonnen werden, deren zeitliche Verläufe in FIG 4 und FIG 6 dargestellt sind. Aus den Antennensignalen s₁ bzw. s₂ ergeben sich die Zeitpunkte t_{N1} bzw. t_{N2}, zu welchen die Flugzeugnase N den Teilbereich E1 bzw. E2 durchdringt, sowie die Zeitpunkte t_{T1} bzw. t_{T2}, zu welchen der Flugzeugschwanz T den Teilbereich E1 bzw. E2 durchdringt.

In der Steuereinheit 12 werden nun beim Durchdringen der Flugzeugnase N durch die Teilbereiche E1 bzw. E2 aus der Frequenzverschiebung die Abstände l₁ bzw. l₂ der Flugzeugnase N vom Radarsensor 11 berechnet. Daraus lässt sich ermitteln, ob die Position des Flugzeuges A seitlich von der Mittellinie M des Rollweges R abweicht. Ferner ist unter Einbeziehung des Winkels α die Bestimmung der Weglänge 1 zwischen der Passage des ersten und zweiten Teilbereiches E1 bzw. E2 möglich. Die Geschwindigkeit des Flugzeuges A wird als Mittelwert aus der Geschwindigkeiten der Flugzeugnase N und des Flugzeugschwanzes T angenommen. Die Geschwindigkeiten von Nase N und Schwanz T des Flugzeuges A ergeben sich durch Division der Weglänge 1 durch die jeweiligen Zeitdifferenzen (t_{N2} - t_{N1}) bzw. (t_{T2} - t_{T1}) der Antennensignale s₁ bzw. s₂. Vergleicht man die beiden Zeitdifferenzen kann auf eine Beschleunigung oder auf eine Verzögerung des Flugzeuges A geschlossen werden. Des Weiteren kann die Flugzeuglänge durch Multiplikation des Mittelwertes aus den Zeitdifferenzen mit der errechneten Geschwindigkeit bestimmt werden. Die Flugzeuglänge kombiniert mit der Signatur, also dem zeitlichen Verlauf der Sensoramplitude, ermöglicht schließlich eine Bestimmung des Flugzeugtyps, genauer gesagt des Fahrzeugtyps, da auf diese Weise auch Bodenfahrzeuge von Luftfahrzeugen unterschieden werden können.

Die Vielzahl an erfassten Informationen, im einfachsten Fall die Detektion der Präsenz eines Flugzeugs A im Erfassungsbereich E, können nun über eine Kommunikationsschnittstelle, welche eine Kommunikationseinheit 16 der Erfassungsvorrichtung 10 sowie eine Kommunikationsleitung 17 umfassen kann, nach außen übertragen werden. Die Kommunikationsschnittstelle ist als bidirektionaler Feldbus ausgebildet, an dem eine zentrale Bedien- und Beobachtungseinheit 20 für Kontrollpersonal, etwa auf einem Kontrollturm des Flughafens, und eine Befeuerungseinrichtung 30 angeschlossen sind. Die Befeuerungseinrichtung 30 ist unmittelbar vor der Einmündung des Taxiweges R in die Start- bzw. Landebahn und in Fahrtrichtung V des Flugzeuges A nach der Erfassungsvorrichtung 10 angeordnet und umfasst zwei seitlich des Rollweges R installierte Überflurfeuer und eine Querreihe mittig in den Rollweg eingebetteter Unterflurfeuer zur Abgabe von Sperrsignalen an einen Piloten des Flugzeuges A. Hat beispielsweise das Flugzeug A eine aktive Halteposition nicht beachtet, so meldet die Steuereinheit 12 die Erfassung des Flugzeuges A über die Kommunikationsschnittstelle 16 bzw. 17 an die Bedien- und Beobachtungseinheit 20 sowie an die Befeuerungseinrichtung 30. Nach Bestätigung durch das Kontrollpersonal über die Einheit 20 wird die Befeuerungseinrichtung 30 angesteuert, um ein Sperrsignal zu generieren. Dies dient der visuellen Signalisierung des Piloten, damit dieser ein Eindringen des Flugzeugs A in die Start- bzw. Landebahn zu verhindern versucht. Insofern leistet die erfindungsgemäße Erfassungsvorrichtung 10 eine Sicherheitsnetzfunktion in Flugfeldüberwachungssystemen dar.

## Patentansprüche

1. Vorrichtung (10) zur Erfassung eines Fahrzeuges, insbesondere eines Luftfahrzeuges (A), auf einem Rollweg (R) eines Flughafens, insbesondere auf einer Start- oder Landebahn, auf einem Taxiweg oder im Vorfeldbereich, mit wenigstens einem im Bereich des Rollweges (R) angeordneten Radarsensor (11), der oder die zur Abtastung eines räumlichen Erfassungsbereichs (E) mit einem Radarstrahl ausgebildet ist bzw. sind, wobei der Erfassungsbereich (E) zwei keulenförmige, sich horizontal über den Rollweg (R) und quer zu einer Mittellinie (M) des Rollweges (R) erstreckende Teilbereiche (E1, E2) aufweist, **dadurch gekennzeichnet, dass** der Radarsensor (11) zur Abtastung des Erfassungsbereichs (E) mit Mikrowellen ausgebildet ist, dass die Vorrichtung (10) eine lokale Steuereinheit (12) zur Auswertung von vom Radarsensor (11) gelieferten Abtastsignalen und eine Befeuerungseinrichtung (30) aufweist, wobei die Steuereinheit (12) über eine Kommunikationsschnittstelle (16, 17) zur Ansteuerung mit der Befeuerungseinrichtung (30) verbunden ist und wobei die Befeuerungseinrichtung (30) am Rollweg (R) dem Erfassungsbereich (E) des Radarsensors (11) in einer Fahrtrichtung (V) des Fahrzeuges (A) nachfolgend angeordnet und zur Abgabe eines Lichtsignals an ein vom Radarsensor (11) erfasstes Fahrzeug (A) ausgebildet ist.

2. Erfassungsvorrichtung (10) nach Anspruch 1, wobei der wenigstens eine Radarsensor (11) zweistrahlig ausgebildet ist und wobei die zwei Teilbereiche (E1, E2) des Erfassungsbereichs (E) um einen in einer horizontalen Ebene liegenden Winkel (α) zueinander verdreht ausgerichtet sind.

3. Erfassungsvorrichtung (10) nach Anspruch 1 oder 2, wobei der Radarsensor (11) zur Abtastung seines Erfassungsbereichs (E) mittels des frequenzmodulierten Dauerstrichverfahrens ausgebildet ist.

4. Erfassungsvorrichtung (10) nach einem der Ansprüche 1 bis 3, wobei die Steuereinheit (12) zur Bestimmung einer Position, einer Geschwindigkeit, einer Beschleunigung, einer Länge und eines Typs des Fahrzeugs (A) ausgebildet ist.

5. Erfassungsvorrichtung (10) nach einem der Ansprüche 1 bis 4, wobei die Steuereinheit (12) über eine Kommunikationsschnittstelle (16, 17) zum bidirektionalen Datenaustausch mit einer zentralen Bedien- und Beobachtungseinheit (20) verbunden ist.

6. Erfassungsvorrichtung (10) nach einem der Ansprüche 1 bis 5, mit einem den wenigstens einen Radarsensor (11) aufnehmenden Gehäuse (13), welches einen für Mikrowellen durchlässigen Bereich aufweist.

7. Erfassungsvorrichtung (10) nach einem der Ansprüche 1 bis 6, wobei das Gehäuse (13) über Flurniveau (F) seitlich des Rollweges (R) angeordnet und mittels einer eine Sollbruchstelle (14) aufweisenden Bodenhalterung (15) befestigt ist.

8. Erfassungsvorrichtung (10) nach Anspruch 7, wobei der Radarsensor in das Gehäuse eines Unterflur oder eines Überflurfeuers integriert ist.

## Claims

1. Device (10) for the detection of a vehicle, particularly of an aircraft (A), on a runway (R) of an airport, particularly on a take-off or landing strip, on a taxi runway or on the ramp, having at least one radar sensor (11) arranged in the field of the runway (R), that is configured with a radar beam for scanning a spatial detection field (E), wherein the detection field (E) has two lobe-shaped partial fields (E1, E2) extending horizontally over the runway (R) and transverse to a centre line (M) of the runway (R), **characterised in that** the radar sensor (11) is configured for scanning the detection field (E) using microwaves, **in that** the device is provided with a local control unit (12) for analyzing scanning signals supplied by the radar sensor (11) and with a lighting unit (30), wherein the control unit (12) is connected via a communication interface (16, 17) to the lighting unit (30) for actuation thereof, and wherein the lighting unit is arranged on the runway (R) following the detection field (E) of the radar sensor (11), in a driving direction (V) of the vehicle (A), and is configured for emitting a light signal to a vehicle (A) detected by the radar sensor (11).

2. Detection device (10) according to claim 1, wherein the at least one radar sensor (11) has a double-beam configuration and wherein the two partial fields (E1, E2) of the detection field (E) are aligned relative to each at a divergence angle (α) in a horizontal plane.

3. Detection device (10) according to claim 1 or 2, wherein the radar sensor (11) is configured for scanning its detection field (E) by means of a frequency modulated continuous wave method.

4. Detection device (10) according to any one claim 1 to 3, wherein the control unit (12) is configured for determining a position, a speed, an acceleration, a length and a type of vehicle (A).

5. Detection device (10) according to any one claim 1 to 4, wherein the control unit (12) is connected to a central operation and monitoring unit (20) via a communication interface (16, 17) for bidirectional data exchange.

6. Detection device (10) according to any one of the claims 1 to 5, having a housing (13) accommodating the at least one radar sensor (11), which comprises a region that is permeable to microwaves.

7. Detection device (10) according to any one of the claims 1 to 6, wherein the housing (13) is arranged sideways to the runway (R) above pavement level (F), and is fastened by means of a ground fixture (15) having a point of weakness (14).

8. Detection device (10) according to claim 7, wherein the radar sensor is integrated in the housing of an inpavement or above-pavement light.

## Revendications

1. Dispositif (10) de détection d'un véhicule, en particulier d'un aéronef (A) sur une voie de roulement (R) d'un aéroport, en particulier sur une piste de décollage ou d'atterrissage, sur une voie de circulation ou sur l'aire de stationnement, comportant au moins un capteur radar (11) disposé au niveau de la voie de roulement (R), capteur(s) radar qui est ou sont conçu(s) pour le balayage d'un champ de détection spatiale (E) à l'aide d'un faisceau radar, le champ de détection (E) comportant deux sous-champs (E1, E2) en forme de lobes, s'étendant horizontalement au-dessus de la voie de roulement (R) et transversalement à une ligne médiane (M) de la voie de roulement (R), **caractérisé en ce que** le capteur radar (11) est conçu pour le balayage du champ de détection (E) au moyen de microondes, **en ce que** le dispositif (10) comporte une unité de commande locale (12) pour l'évaluation de signaux de balayage fournis par le capteur radar (11) et un aménagement de balisage (30), l'unité de commande (12) étant reliée à l'aménagement de balisage (30) pour la commande de celui-ci, par le biais d'une interface de communication (16, 17) et l'aménagement de balisage (30) étant disposé sur la voie de roulement (R), après le champ de détection (E) du capteur radar (11), dans un sens de roulement (V) du véhicule (A) et conçu pour émettre un signal lumineux vers un véhicule (A) détecté par le capteur radar (11).

2. Dispositif de détection (10) selon la revendication 1, **caractérisé en ce que** le ou les capteur(s) radar (11) est/sont équipé(s) de deux faisceaux et les deux sous-champs (E1, E2) du champ de détection (E) sont orientées en décalage l'un par rapport à l'autre, d'un angle (α) situé dans un plan horizontal.

3. Dispositif de détection (10) selon la revendication 1 ou 2, **caractérisé en ce que** le capteur radar (11) est conçu pour le balayage de son champ de détection (E) au moyen d'un procédé à ondes continues modulées en fréquence.

4. Dispositif de détection (10) selon l'une quelconque des revendications 1 à 3, **caractérisé en ce que** l'unité de commande (12) est conçue pour déterminer une position, une vitesse, une accélération, une longueur et le type du véhicule (A).

5. Dispositif de détection (10) selon l'une quelconque des revendications 1 à 4, **caractérisé en ce que** l'unité de commande (12) est reliée à une unité d'opération et d'observation centrale (20) par le biais d'une interface de communication (16, 17) pour l'échange bidirectionnel des données.

6. Dispositif de détection (10) selon l'une quelconque des revendications 1 à 5, comportant un boîtier (13) logeant le ou les capteur(s) radar (11), lequel boîtier comprend une zone perméable aux microondes.

7. Dispositif de détection (10) selon l'une quelconque des revendications 1 à 6, **caractérisé en ce que** le boîtier (13) est agencé au-dessus du niveau du sol (F), de côté de la voie de roulement (R), et est fixé au moyen d'une fixation au sol (15) comportant un point de rupture prédéterminé (14).

8. Dispositif de détection (10) selon la revendication 7, **caractérisé en ce que** le capteur radar est intégré dans le boîtier d'un feu encastré ou en saillie.
